# EUROPÄISCHE PATENTSCHRIFT

(11) **EP 3 724 515 B1**
(45) Veröffentlichungstag und Bekanntmachung des Hinweises auf die Patenterteilung: **12.04.2023**
(21) Anmeldenummer: 18766245.7
(22) Anmeldetag: 07.09.2018
(51) Int. Cl.: E02F 9/22

(54) **DRUCKLUFTVERSORGUNGSANLAGE ZUM BETREIBEN EINER PNEUMATIKANLAGE, VERFAHREN UND FAHRZEUG**
COMPRESSED AIR SUPPLY DEVICE FOR DRIVING A PNEUMATIC DEVICE, METHOD AND VEHICLE
DISPOSITIF D'ALIMENTATION EN AIR COMPRIMÉ POUR L'EXPLOITATION D'UNE INSTALLATION PNEUMATIQUE, MÉTHODE ET VÉHICULE

(30) Priorität: 13.12.2017 DE 102017011526
(43) Veröffentlichungstag der Anmeldung: 21.10.2020
(73) Patentinhaber: ZF CV Systems Europe BV, 1170 Brussels (BE)
(72) Erfinder: MEIER, Jörg, 31840 Hessisch Oldendorf (DE)
(74) Vertreter: Rabe, Dirk-Heinrich
(86) Internationale Anmeldenummer: PCT/EP2018/074183
(87) Internationale Veröffentlichungsnummer: WO 2019/115028

(56) Entgegenhaltungen:
- DE-A1- 10 357 762
- DE-A1-102012 005 345

## Beschreibung

Die Erfindung betrifft eine Druckluftversorgungsanlage, zum Betreiben einer Pneumatikanlage in einem pneumatischen System eines Fahrzeugs, aufweisend eine Druckluftzuführung; einen Druckluftanschluss zur Pneumatikanlage; einen Entlüftungsanschluss zur Umgebung; eine pneumatische Hauptleitung zwischen der Druckluftzuführung und dem Druckluftanschluss, die einen Lufttrockner aufweist; ein auf der pneumatischen Hauptleitung angeordnetes, als Vorsteuerventil ausgebildetes Entlüftungsventil, mit einem Vorsteueranschluss, einen mindestens eine Verdichterstufe aufweisenden Verdichter, zusätzlich zur pneumatischen Hauptleitung, ein Vorsteuerventil und einen pneumatischen Vorsteuerkanal, der das Vorsteuerventil mit dem Vorsteueranschluss des Entlüftungsventils pneumatisch verbindet. Die Erfindung betrifft auch ein entsprechendes Fahrzeug und Verfahren.

Druckluftversorgungsanlagen mit vorgesteuerten Entlüftungsventilen sind allgemein bekannt. Dieser grundsätzlich vorteilhafte Ansatz zeichnet sich dadurch aus, dass relativ geringe Kräfte zum Stellen des Entlüftungsventils benötigt werden, und somit die Betätigungskräfte des Vorsteuerventils geringer ausfallen können.

DE 103 01 119 A1 offenbart ein Luftfederungssystem mit einer Ventileinrichtung, die ein pneumatisch betätigbares Entlüftungsventil aufweist, das mit der Druckluft des Luftfederungssystems über ein elektromagnetisch betätigbares Steuerventil vorsteuerbar ist und über das die Luftfederbälge und/oder der Druckluftspeicher mit der Atmosphäre verbindbar sind.

Ein derartiges Konzept ist jedoch noch verbesserungswürdig, insbesondere hinsichtlich der Möglichkeit einer Entlüftung auf einen niedrigeren Druck, insbesondere einer Entlüftung auf praktisch 0 bar. Auch ist ein derartiges Konzept noch verbesserungswürdig hinsichtlich der Entlüftung von initial niedrigen Drücken.

DE 10 2012 001 736 A1 beschreibt eine Druckluftversorgungsanlage, bei der vorgesehen ist, dass an die Steuerleitung eine druckhaltende pneumatische Einrichtung angeschlossen ist, die ausgebildet ist, den Vorsteueranschluss bei geöffnetem Entlüftungs-Ventilanschluss des Entlüftungsventils in der Entlüftungsleitung unter Steuerdruck zu halten, unabhängig von einem Druck in der Entlüftungsleitung und/ oder der pneumatischen Hauptleitung.

WO 01/56820 A1 beschreibt ein Luftfedersystem für ein Kraftfahrzeug mit einer Kompressoreinheit, einer Speichereinheit sowie Schaltventilen, über die die einzelnen Luftfedern der einzelnen Fahrzeugräder mit Druckluft versorgt werden, wobei im Bereich zwischen der Kompressoreinheit und den Schaltventilen eine in der Atmosphäre mündende, durch ein Sperrventil absperrbare oder freischaltbare Entlüftungsleitung vorgesehen ist.

DE 39 19 438 A1 beschreibt eine druckmittelbetätigbare Einrichtung mit einem zwischen einer Druckmittelquelle und Verbrauchern befindlichen Lufttrockner. Bedingt durch die Beschaffenheit des Lufttrockners erfolgt dabei die Entfeuchtung im sogenannten Regenerationsbetrieb nur mit entspannter Luft, d. h. mit einem Druck, der wesentlich niedriger ist, als der, der beim Entleeren von den Verbrauchern abgeführten Luft. Das Entspannen der Luft erfolgt mit Hilfe einer Drosselstelle, die in der Leitungsverbindung von den Verbrauchern zum Lufttrockner während des Entleerens der Verbraucher wirksam ist. Die neue Einrichtung soll ermöglichen, dass der beim Entleeren des Verbrauchers erfolgende Regel- bzw. Betätigungsvorgang im Wesentlichen unbeeinflusst von der Drosselstelle und mit einer erhöhten Regel- bzw. Betätigungsgeschwindigkeit erfolgen kann.

Die DE102012005345A1 offenbart eine eine Druckluftversorgungsanlage zum Betreiben einer Pneumatikanlage, insbesondere einer Luftfederanlage eines Fahrzeugs, aufweisend: - eine Druckluftzuführung, einen Druckluftanschluss zur Pneumatikanlage und einen Entlüftungsanschluss zur Umgebung; - zwischen der Druckluftzuführung und dem Druckluftanschluss eine Pneumatikhauptleitung, die einen Lufttrockner und ein entsperrbares Rückschlagventil einer Ventilanordnung aufweist; - zwischen dem Druckluftanschluss und dem Entlüftungsanschluss eine Entlüftungsleitung mit einem Entlüftungsventil einer Ventilanordnung. Die Pneumatikanlage weist mehrere Luftfedern und einen einzigen Druckluftspeicher auf, welche jeweils über ein Schaltventil mit der Pneumatikhauptleitung in Verbindung stehen oder von dieser pneumatisch getrennt sind. In der DE102012005345A1 ist weiter vorgesehen, dass die Ventilanordnung in einem Ventilgehäusemodul angeordnet ist, wobei das Ventilgehäusemodul über einen Flansch modular an die Druckluftversorgungsanlage anbringbar ist, wobei das Ventilgehäusemodul eine dem Flansch gegenüberliegend angeordnete Stufenbohrung aufweist, in der zur Bildung des entsperrbaren Rückschlagventils und des Entlüftungsventils ein gestufter Relaiskolbens druckaktuierbar beweglich angeordnet ist, wobei eine Abfolge von aufeinanderfolgenden Abschnitten der Stufenbohrung entlang einer Ventilachse mit jeweils verjüngtem Querschnitt gebildet ist, wobei dieser eine Abfolge von aufeinanderfolgenden Abschnitten des Relaiskolbens entlang der Ventilachse mit jeweils verjüngtem Querschnitt zugeordnet ist.

Derartige Konzepte sind trotz vorteilhafter druckhaltender pneumatischer Einrichtungen, weiter verbesserungswürdig, insbesondere hinsichtlich ihrer Kompaktheit und einer einfachen Konstruktion. Auch sind derartige Konzepte insbesondere noch verbesserungswürdig hinsichtlich der Entlüftung von initial niedrigen Drücken. Selbst bei hinreichend hohen Drücken benötigen insbesondere beide letztgenannten Konzepte einen hinreichend hohen Staudruck vor der Trocknerdrossel, um ein sicheres Öffnen des Relaiskolbens zu gewährleisten. Das erfordert große Nennweiten der vorgeschalteten Pneumatikperipherie.

An dieser Stelle setzt die Erfindung an, deren Aufgabe es ist, in verbesserter Weise eine Druckluftversorgungsanlage anzugeben. Insbesondere soll ein Halten des Drucks unabhängig von einem Druck in einem pneumatischen System, insbesondere einer Hauptleitung, ermöglicht werden.

Die Aufgabe, betreffend die Druckluftversorgungsanlage, wird durch die Erfindung mit einer Druckluftversorgungsanlage des Anspruchs 1 gelöst. Die Erfindung geht aus von einer Druckluftversorgungsanlage, zum Betreiben einer Pneumatikanlage in einem pneumatischen System eines Fahrzeugs, aufweisend eine Druckluftzuführung; einen Druckluftanschluss zur Pneumatikanlage; einen Entlüftungsanschluss zur Umgebung; eine pneumatische Hauptleitung zwischen der Druckluftzuführung und dem Druckluftanschluss, die einen Lufttrockner aufweist; ein auf der pneumatischen Hauptleitung angeordnetes, als Vorsteuerventil ausgebildetes Entlüftungsventil, mit einem Vorsteueranschluss, einen mindestens eine Verdichterstufe aufweisenden Verdichter, zusätzlich zur pneumatischen Hauptleitung, ein Vorsteuerventil und einen pneumatischen Vorsteuerkanal, der das Vorsteuerventil mit dem Vorsteueranschluss des Entlüftungsventils pneumatisch verbindet.

Erfindungsgemäß ist bei der Druckluftversorgungsanlage vorgesehen, dass an den Vorsteueranschluss eine druckhaltende pneumatische Reservoireinrichtung angeschlossen ist, die ausgebildet ist, einen Steuerdruck für den Vorsteueranschluss bereitzustellen, unabhängig von einem Druck in der pneumatischen Hauptleitung während eines Entlüftens des pneumatischen Systems, und die druckhaltende pneumatische Reservoireinrichtung mindestens einen separaten Vorsteuer-Druckspeicher aufweist, der über die Steuerleitung pneumatisch mit dem Vorsteueranschluss verbindbar ist.

Des Weiteren wird die Aufgabe durch ein Verfahren des Anspruchs 8 und ein Fahrzeug des Anspruchs 11 gelöst.

Ein als pneumatisches Vorsteuerventil ausgebildetes Entlüftungsventil hat, z. B. gegenüber einem Magnetventil, allgemein den Vorteil, dass es ein Schalten großer Nennweiten von unter relativ hohen Drücken stehenden Luftströmen ermöglicht, insbesondere ohne wie bei einem Magnetventil hohe Ströme zu benötigen.

Die Erfindung geht von der Überlegung aus, dass eine druckhaltende pneumatische Einrichtung grundsätzlich vorteilhaft ist, da mit ihr ein Vorsteuern des Entlüftungsventils unabhängig von einem Druck in der Hauptleitung möglich ist. Eine druckhaltende pneumatische Reservoireinrichtung ermöglicht auf diese Weise eine Entlüftung auch bei niedrigen Balgdrücken. Ferner ist es möglich, das pneumatische System, insbesondere die Pneumatikanlage, auf relativ niedrige Drücke, insbesondere auf einen Druck von praktisch 0 bar, zu entlüften. Auch bei initial niedrigen Drücken, wie sie z. B. in den Hinterachsfedern vorliegen können, wird durch eine druckhaltende pneumatische Reservoireinrichtung eine Entlüftung ermöglicht.

Die Erfindung hat erkannt, dass ein Speichern und zum Bereitstellen von Druckluft unabhängig von einem Druck in der Pneumatikanlage, insbesondere ein Bereitstellen von Druckluft in einem Druckspeicher, insbesondere in einem der Vorsteuerung dienenden Vorsteuer-Druckspeicher, vorteilhaft ist. Durch eine derartige Unabhängigkeit von einem Druck in der Pneumatikanlage ist es beispielsweise möglich, auch bei nahezu oder vollständig entleerten Federbälgen eine ausreichende Menge an ausreichend verdichteter Druckluft zum Vorsteuern des Entlüftungsventils bereitzustellen. Weiterhin ist es durch die Bereitstellung eines Drucks für die Vorsteuerung des Entlüftungsventils aus einem Vorsteuer-Druckspeicher vorteilhaft möglich, eine in der Entlüftungsleitung angeordnete Regenerationsdrossel mit einem relativ großen Durchmesser vorzusehen um eine möglichst rasche Entlüftung, unter Berücksichtigung einer möglichst effektiven Regeneration des Lufttrockners nach dem Prinzip der Druckwechseladsorption, zu ermöglichen. Eine effektive Entlüftung wird insbesondere dadurch erreicht, dass die zur Vorsteuerung verwendete Druckluft nunmehr aus der druckhaltenden pneumatischen Einrichtung, insbesondere einem Vorsteuer-Druckspeicher, entnommen wird. Durch das Bereitstellen des Steuerdrucks für das Entlüftungsventil durch die druckhaltende pneumatische Einrichtung muss die Trocknerdrossel nicht mehr auf einen hinreichenden Staudruck ausgelegt werden. Somit müssen vorteilhaft bei der Drosselauslegung insbesondere nur noch die Regenerationsgüte und die Absenkgeschwindigkeit berücksichtigt werden. Dies führt weiterhin zu dem Vorteil, dass wenn die der Trocknerdrossel vorgeschaltete Peripherie mit relativ geringen Strömungsdurchmessern ausgelegt ist - und demnach bei geöffnetem Ablasspfad kein Staudruck vor der Trocknerdrossel entstehen kann -das Relaisventil sicher und vollständig geöffnet bleiben kann.

Die Erfindung hat weiter erkannt, dass eine Anordnung mit einem Vorsteuer-Druckspeicher, der über eine Speicherverbindung mit einer Druckquelle, insbesondere einer Hauptleitung oder einem Druckspeicher oder einer Galerie, verbunden ist und einem in der Speicherverbindung angeordneten Druckspeicher-Rückschlagventil vorteilhaft ist. Der Vorteil einer solchen Anordnung liegt hierbei insbesondere darin, dass der Vorsteuer-Druckspeicher selbstständig befüllt wird, sobald in der Druckquelle ein Druck herrscht. Falls der Druck in der Druckquelle jedoch abfällt, wird durch das in Richtung der Druckquelle, also zum Beispiel in Richtung der Hauptleitung oder des Druckspeichers oder der Galerie, sperrende Druckspeicher-Rückschlagventil verhindert, dass der Druckspeicher sich entleert. Vergleichbar mit einem elektrischen Kondensator wird somit der stets höchste an der Druckquelle anliegende Druck gespeichert.

Die druckhaltende pneumatische Reservoireinrichtung weist einen Vorsteuer-Druckspeicher auf, der mit dem Vorsteueranschluss pneumatisch verbindbar ist. Konkret beinhaltet dies, dass zusätzlich zu einem bereits vorhandenen, primären Druckspeicher, ein zusätzlicher, insbesondere ausschließlich der Beaufschlagung des Vorsteueranschlusses des Entlüftungsventils dienender Vorsteuer-Druckspeicher, vorgesehen ist. Auf diese Weise wird vorteilhaft erreicht, dass unabhängig von einem Druck in einem pneumatischen System, insbesondere in einer pneumatischen Hauptleitung und/oder Galerie, oder unabhängig von einem Befüllungsstand eines primären Druckspeichers, der insbesondere in der Pneumatikanlage eingesetzt wird, in einem zusätzlichen Vorsteuer-Druckspeicher stets eine ausreichende Menge an ausreichend verdichteter Druckluft zum Ansteuern des Entlüftungsventils bereitgehalten wird, insbesondere wenn das Druckniveau im Druckspeicher und/oder in der pneumatischen Hauptleitung hierzu nicht mehr ausreicht.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorteilhaft ist vorgesehen, dass der Vorsteuer-Druckspeicher über eine Speicherverbindung mit der pneumatischen Hauptleitung pneumatisch verbindbar ist. Dies beinhaltet insbesondere, dass die im Verdichter verdichtete Druckluft von der pneumatischen Hauptleitung über die Speicherverbindung in den Vorsteuer-Druckspeicher strömen kann. Auf diese Weise gelangt Druckluft, sobald diese bereitgestellt wird, insbesondere für einen anderen Zweck wie zum Beispiel für die Pneumatikanlage, in den Vorsteuer-Druckspeicher, und dieser wird somit befüllt. Dies geschieht vorteilhaft - insbesondere ohne dass es einer weiteren Ventilansteuerung bedarf - selbstständig.

Insbesondere ist vorgesehen, dass der Vorsteuer-Druckspeicher über eine Speicherverbindung mit dem Druckspeicher pneumatisch verbindbar ist. Dies bedeutet insbesondere, dass über eine Speicherverbindung der Vorsteuer-Druckspeicher über den Druckspeicher befüllt werden kann. Die Druckluft, die beim Befüllen des Druckspeichers in diesen hereinströmt, strömt dann über die Speicherverbindung weiter in den Vorsteuer-Druckspeicher. Auf diese Weise wird unter relativ geringem konstruktiven Aufwand eine Befüllung des Vorsteuer-Druckspeichers erreicht, und zwar vorteilhaft selbstständig beim Befüllen des Druckspeichers.

Vorteilhaft ist vorgesehen, dass der Vorsteuer-Druckspeicher über eine Speicherverbindung mit einer Galerie pneumatisch verbindbar ist. Dies kann konkret bedeuten, dass der Vorsteuer-Druckspeicher über die Galerie des pneumatischen Systems befüllt werden kann. Der Vorsteuer-Druckspeicher wird somit befüllt, wenn der in der Galerie herrschende Druck höher ist als der Gegendruck des Druckspeicher-Rückschlagventils oder als der bereits im Vorsteuer-Druckspeicher herrschende Druck. Durch das Druckspeicher-Rückschlagventil wird auch in dieser Weiterbildung vorteilhaft erreicht, dass der Druck im Vorsteuer-Druckspeicher gehalten wird, auch wenn der Druck in der Galerie zwischenzeitlich wieder sinkt.

Insbesondere ist vorgesehen, dass in der Speicherverbindung ein in Richtung des Vorsteuer-Druckspeichers, insbesondere gegen eine Federkraft, öffnendes und in entgegengesetzte Richtung sperrendes Druckspeicher-Ventil, insbesondere ein Druckspeicher-Rückschlagventil, angeordnet ist. Das Druckspeicher-Ventil kann hierbei als pneumatisch und/oder elektrisch schaltbares Ventil ausgebildet sein, oder besonders bevorzugt als Rückschlagventil in Form eines Druckspeicher-Rückschlagventils. Dies beinhaltet insbesondere, dass Luft ausschließlich in Befüllungsrichtung in den Vorsteuer-Druckspeicher strömen kann, nicht jedoch umgekehrt. Auf diese Weise wird erreicht, dass der Vorsteuer-Druckspeicher automatisch befüllt wird, sobald ein ausreichender Druck an der Speicherverbindung anliegt. Gleichzeitig wird erreicht, dass die in dem Vorsteuer-Druckspeicher gespeicherte Druckluft nicht wieder durch die Speicherverbindung entweichen kann, und somit in dem Vorsteuer-Druckspeicher bereitgehalten wird, bis sie zum Ansteuern des Entlüftungsventils benötigt wird. Aufgrund der Tatsache, dass in einem Pneumatiksystem während des Betriebs unterschiedliche Druckniveaus vorherrschen (zum Beispiel 5 bar in den Federbälgen der Hinterachse, 10bar in den Federbälgen der Vorderachse, 18 bar im Druckspeicher bzw. Reservoir), hält der Vorsteuer-Druckspeicher den zuletzt anliegenden höchsten Druck (zum Beispiel einen Druck von 18 bar, der beim Befüllen des Druckspeichers vorherrscht). Damit steht bei einem anschließenden Entlüften der Hinterachs-Federbälge für das Öffnen des Relaisventils ein Vorsteuerdruck von 18 bar zur Verfügung. Durch das Vorhalten der Druckluft in dem Druckspeicher ist es bei ausreichend großem Volumen des Druckspeichers auch vorteilhaft möglich, den Druckspeicher für die mehrfache Betätigung des als Relaisventil ausgebildeten Vorsteuerventil, insbesondere ohne erneutes Befüllen des Druckspeichers, zu verwenden. Durch das Vorhalten der Druckluft in dem Druckspeicher kann weiterhin - aufgrund des relativ hohen Luftdrucks von beispielsweise 18 bar - das Relaisventil vorteilhaft kleiner ausgelegt werden.

Vorteilhaft ist vorgesehen, dass die druckhaltende pneumatische Reservoireinrichtung vollständig oder teilweise in die Druckluftversorgungsanlage integriert ist, insbesondere eine bauliche Einheit mit dieser bildet. Dies bedeutet konkret, dass die druckhaltende pneumatische Reservoireinrichtung in die - im Wesentlichen eine bauliche Einheit bildende - Druckluftversorgung integriert ist. Hierbei kann die Druckluftversorgung als eine geschlossene bauliche Einheit gebildet sein oder als ein baukastenartiges System aus Modulen, welche zur Konfiguration einer Druckluftversorgung zusammengebaut werden und wobei die druckhaltende pneumatische Reservoireinrichtung ein Modul oder den Teil eines Moduls bildet. Insbesondere kann die Druckluftversorgungsanlage dabei neben der druckhaltenden pneumatischen Reservoireinrichtung die Verdichteranordnung, die pneumatische Hauptleitung, das Entlüftungsventil, den Lufttrockner und die Entlüftungsleitung aufweisen.

Insbesondere ist vorgesehen, dass die druckhaltende pneumatische Reservoireinrichtung vollständig oder teilweise in einen Magnetventilblock integriert ist. Dies bedeutet konkret insbesondere, dass der Magnetventilblock eine bauliche Einheit bildet, der unter anderem auch die druckhaltende pneumatische Reservoireinrichtung umfasst. Auch ist analog zu der vorher beschriebenen Weiterbildung eine modulartige Integration der druckhaltenden pneumatischen Reservoireinrichtung möglich.

Durch die Integration der druckhaltenden pneumatischen Reservoireinrichtung können Vorteile insbesondere hinsichtlich einer Verringerung des benötigten Bauraums, Gewichtseinsparungen und Kosteneffizienz der Bauteile erreicht werden.

Die Erfindung führt zur Lösung der Aufgabe auch auf ein Verfahren zum Betreiben einer Druckluftversorgungsanlage gemäß dem Konzept der Erfindung, wobei die Druckluftversorgungsanlage zum Betreiben einer Pneumatikanlage in einem pneumatischen System eines Fahrzeugs eingesetzt wird und eine druckhaltende pneumatische Reservoireinrichtung mit mindestens einem separaten Vorsteuer-Druckspeicher aufweist, aufweisend die Schritte: Verdichten von Druckluft, Versorgen des pneumatischen Systems, insbesondere der Pneumatikanlage und/oder eines Druckspeichers und/oder einer Galerie mit Druckluft, Befüllen des Vorsteuer-Druckspeichers, Betreiben der Pneumatikanlage, Entlüften des pneumatischen Systems über ein als Vorsteuerventil ausgebildetes Entlüftungsventil, mit einem Vorsteueranschluss, wobei eine an den Vorsteueranschluss angeschlossene druckhaltende pneumatische Reservoireinrichtung den Vorsteueranschluss unter Steuerdruck hält, unabhängig von einem Druck in der pneumatischen Hauptleitung während eines Entlüftens des pneumatischen Systems, der Vorsteuer-Druckspeicher über die Steuerleitung zum Betätigen des Entlüftungsventils pneumatisch mit dem Vorsteueranschluss verbunden wird.

Beim erfindungsgemäßen Verfahren zum Betreiben einer Druckluftversorgunganlage werden die Vorteile der Druckluftversorgunganlage vorteilhaft genutzt. Insbesondere die Entlüftung mittels eines als Vorsteuerventil ausgebildeten Entlüftungsventils ermöglicht vorteilhaft, die Entlüftung unabhängig von einem Druck in der Hauptleitung vorzunehmen, da die Vorsteuerung des Entlüftungsventils mit separat gespeicherter Druckluft erfolgt. So kann eine Entlüftung zum Beispiel unabhängig von einem in den Federbälgen der Pneumatikanlage herrschenden Druck erfolgen.

In einer Weiterbildung des Verfahrens ist vorgesehen, dass der Vorsteuer-Druckspeicher selbstständig befüllt wird. "Selbstständig" bedeutet im Zusammenhang der Erfindung, dass der Vorsteuer-Druckspeicher befüllt wird, sobald ein Druck an der Druckquelle anliegt, insbesondere ohne dass weitere Maßnahmen notwendig sind. Mit "Druckquelle" sind insbesondere Druckspeicher, Hauptleitung und/oder Galerie gemeint. Gemäß dem Konzept der Erfindung wird so erreicht, dass der Vorsteuer-Druckspeicher stets bei direkt bei einem Vorhandensein von Druckluft befüllt wird, und weiterhin die Druckluft, insbesondere durch ein Druckspeicher-Rückschlagventil, in dem Vorsteuer-Druckspeicher gehalten wird.

In einer weiteren Weiterbildung des Verfahrens ist vorgesehen, dass die druckhaltende pneumatische Reservoireinrichtung über die Hauptleitung und/oder den Druckspeicher und/oder die Galerie befüllt wird.

Die Erfindung führt zur Lösung der Aufgabe auch auf ein Fahrzeug mit einer Druckluftversorgungsanlage gemäß dem Konzept der Erfindung. Das Konzept der Erfindung wird in dem Fahrzeug vorteilhaft genutzt, insbesondere ermöglicht eine druckhaltende pneumatische Reservoireinrichtung gemäß dem Konzept der Erfindung - neben den bereits genannten Vorteilen - eine schnellere mögliche Absenkgeschwindigkeit der Luftfedern.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: Ein pneumatisches System mit einer druckhaltenden pneumatischen Reservoireinrichtung in einer bevorzugten Weiterbildung, wobei ein Vorsteuer-Druckspeicher mit einer Speicherverbindung an den Druckspeicher angeschlossen ist,
- Fig. 2: ein pneumatisches System mit einer druckhaltenden pneumatischen Reservoireinrichtung in einer weiteren bevorzugten Weiterbildung, wobei ein Vorsteuer-Druckspeicher mit einer Speicherverbindung an die Rückführleitung angeschlossen ist,
- Fig. 3: ein pneumatisches System mit einer druckhaltenden pneumatischen Reservoireinrichtung in einer weiteren bevorzugten Weiterbildung, wobei ein Vorsteuer-Druckspeicher mit einer Speicherverbindung an die pneumatische Hauptleitung angeschlossen ist,
- Fig. 4: ein pneumatisches System mit einer druckhaltenden pneumatischen Reservoireinrichtung in einer weiteren bevorzugten Weiterbildung, wobei ein Vorsteuer-Druckspeicher mit einer Speicherverbindung an die Galerie angeschlossen ist,
- Fig. 5A, 5B: eine Schnittdarstellung eines Entlüftungsventils jeweils in einer Förderstellung und in einer Entlüftungsstellung, und
- Fig. 6: eine stark vereinfachte Darstellung eines Fahrzeugs mit einem pneumatischen System.

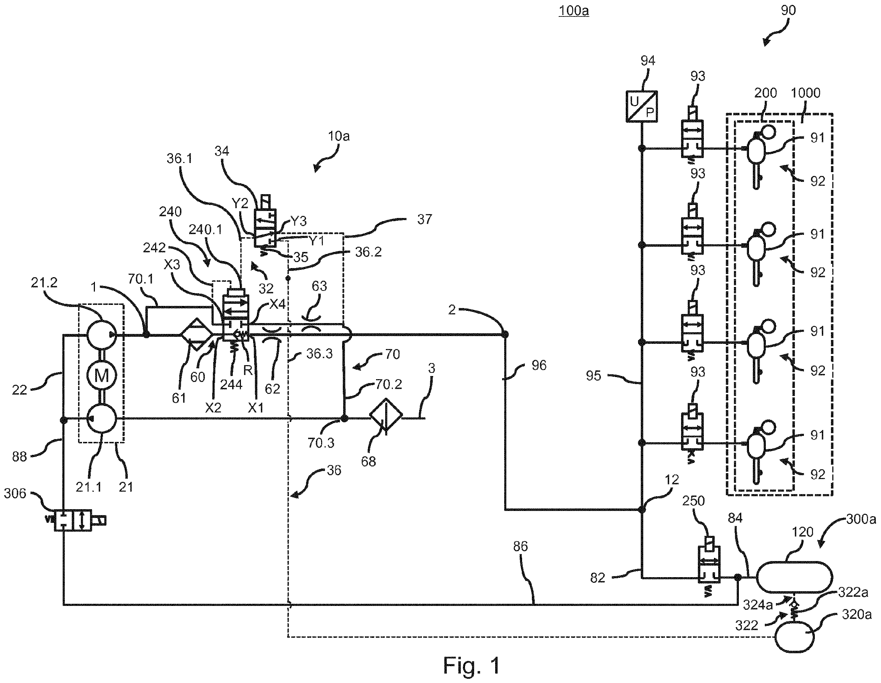

Fig. 1 zeigt eine bevorzugte Ausführung eines pneumatischen Systems 100a mit einer Druckluftversorgungsanlage 10a und einer Luftfederanlage 90 für eine symbolisch gezeigte Fahrzeugfederung eines nicht näher gezeigten Fahrzeugs 1000. Die Druckluftversorgungsanlage 10a weist eine Druckluftzuführung 1, einen Druckluftanschluss 2 zur Luftfederanlage 90 sowie einen Entlüftungsanschluss 3 zur Umgebung auf. Ferner umfasst die Druckluftversorgungsanlage 10a eine pneumatische Hauptleitung 60 zwischen der Druckluftzuführung 1 und dem Druckluftanschluss 2.

Diese und die nachfolgend beschriebene grundsätzliche Maßgabe zum Aufbau des pneumatischen Systems mit der Druckluftversorgungsanlage 10a und der Pneumatikanlage 90 gelten auch für die in Fig. 1 bis Fig. 4 gezeigten Varianten eines pneumatischen Systems 100a, 100b, 100c, 100d mit entsprechender Druckluftversorgungsanlage 10a, 10b, 10c, 10c, 10d. Nachfolgend sind für identische oder ähnliche Merkmale bzw. Teile identischer oder ähnlicher Funktion der Einfachheit halber gleiche Bezugszeichen verwendet worden, wo dies sinnvoll und zweckmäßig ist; gleichwohl ist zu verstehen, dass für die pneumatischen Systeme 100a bis 100d und die Druckluftversorgungsanlagen 10a bis 10d unterschiedliche Varianten von Komponenten und Bauteilen zum Einsatz kommen können.

Die pneumatische Hauptleitung 60 weist einen Lufttrockner 61 sowie eine erste Drossel 62 auf. Eine Entlüftungsleitung 70 der Druckluftversorgungsanlage 10 verbindet die Druckluftzuführung 1 über ein Entlüftungsventil 240 und eine zweite Drossel 63 mit dem Entlüftungsanschluss 3. Ein erster Teil 70.1 der Entlüftungsleitung 70 verbindet dabei die Druckluftzuführung 1 mit dem Entlüftungsventil 240. Ein zweiter Teil 70.2 der Entlüftungsleitung 70 verbindet weiterhin das Entlüftungsventil 240 mit einem Anschlusspunkt 70.3. Der Anschlusspunkt 70.3 ist wiederum über einen Luftfilter 68 mit dem Entlüftungsanschluss 3 verbunden. Ein Galeriehauptanschluss 12 der Luftfederanlage 90 ist mit dem Druckluftanschluss 2 über eine Versorgungsleitung 96 verbunden.

Weiterhin kann mittels eines Vorsteuerventils 34 ein Vorsteueranschluss 240.1 des Entlüftungsventils 240 selektiv mit Druck beaufschlagt werden, sodass das Entlüftungsventils 240 pneumatisch geöffnet und geschlossen werden kann.

Vorliegend ist das Entlüftungsventil 240 als 4/2-Wegeventil ausgebildet. In der hier gezeigten Darstellung ist das Entlüftungsventil 240 in einer ersten, Förderstellung dargestellt. In dieser Förderstellung des Entlüftungsventils 240 kann Druckluft von einem zweiten pneumatischen Anschluss X2 zu einem ersten pneumatischen Anschluss X1 strömen, und zwar durch ein sich gegen eine Federkraft öffnendes Rückschlagventil R. Somit strömt die vom Verdichter 21 geförderte Druckluft über die pneumatische Hauptleitung 60 von der Druckluftzuführung 1 zu dem Druckluftanschluss 2 und weiter zur Pneumatikanlage 90. Die pneumatische Verbindung zwischen einem dritten pneumatischen Anschluss X3 und einem vierten pneumatischen Anschluss X4 ist in der Förderstellung des Entlüftungsventil 240 getrennt, was dazu führt, dass die Entlüftungsleitung 70 unterbrochen ist.

Das Entlüftungsventil 240 kann insbesondere durch pneumatische Betätigung, insbesondere über einen Vorsteueranschluss 240.1, von der dargestellten gesperrten Stellung in eine Entlüftungsstellung gebracht werden. In dieser Entlüftungsstellung kann zum einen Luft vom Druckluftanschluss 2 und weiter vom ersten pneumatischen Anschluss X1 zum zweiten pneumatischen Anschluss X2 durch den Lufttrockner 61 strömen. Über die Druckluftzuführung 1 kann die Luft dann weiter von der Druckluftzuführung 1 und weiter vom dritten pneumatischen Anschluss X3 zum vierten pneumatischen Anschluss X4 über die Entlüftungsleitung 70 zum Entlüftungsanschluss 3 strömen. Auf diese Weise kann der Lufttrockner 61 zwecks Regeneration mittels Druckluft aus dem Druckspeicher oder der Pneumatikanlage entgegen der eigentlichen Förderrichtung durchströmt werden.

Auf der rechten Seite der Fig. 1 gut erkennbar ist eine Pneumatikanlage 90 in Form einer Luftfederanlage eines Fahrzeugs bereitgestellt. Die Luftfederanlage 90 weist eine Galerie 95 auf, an der, jeweils pneumatisch trennbar durch ein als 2/2-Wege-Magnetventil ausgebildetes Wegeventil 93 auf, an das jeweils ein Federbalg 91 einer Luftfeder 92 angeschlossen ist. Mit der Galerie 95 verbunden ist ein Drucksensor 94.

Der Drucksensor 94 ist mit einer hier nicht weiter dargestellten Einrichtung 400 zum Steuern- und Regeln des pneumatischen Systems 100 verbunden, welche hierzu weiterhin signalleitend mit den Ventilen des pneumatischen Systems 100 verbunden ist, insbesondere der Wegeventile 93, dem Vorsteuerventil 34, einem Druckspeicher-Ventil 250, einem Aufladeventil 306. Diese Verbindungen sind vorliegend aus Gründen der Übersichtlichkeit nicht dargestellt. Eine derartige Einrichtung kann beispielsweise durch eine Electronic Control Unit (ECU) gebildet sein.

Weiterhin weist die Druckluftversorgungsanlage 10 vorliegend einen Druckspeicher 120 auf. Der Druckspeicher 120 ist über eine Druckspeicher-Zuleitung 82 mit dem Galeriehauptanschluss 12 gasführend verbunden. Über das Druckspeicher-Ventil 250 kann diese Verbindung selektiv unterbrochen werden.

Die Verdichteranordnung 21 wird vorliegend von einem Motor M angetrieben und saugt zwecks Verdichtung Luft über den Entlüftungsanschluss 3 an. Zwischen Verdichteranordnung 21 und Entlüftungsanschluss 3 ist ein Luftfilter 68 angeordnet. Vorliegend weist der Verdichter 21 eine Niederdruckstufe 21.1 und eine Hochdruckstufe 21.2 auf, die über eine Zwischenleitung 22 pneumatisch miteinander verbunden sind derart, dass die vom Entlüftungsanschluss 3 angesaugte und in der Niederdruckstufe 21.1 vorverdichtete Druckluft in die Hochdruckstufe 21.2 strömen kann, und dort auf ein Hochdruckniveau weiterverdichtet wird, um dann an der Druckluftzuführung 1 bereitgestellt zu werden.

Außerdem ist ein zweiter Vorsteueranschluss 242 am Entlüftungsventil 240 derart vorgesehen, dass das Entlüftungsventil 240 unter Abgreifen eines Drucks an der pneumatischen Hauptleitung 60 betätigt werden kann.

Die Pneumatikanlage 90 weist vorliegend fünf Niveauregelventile auf, die als Balgventil in Form eines Wegeventils 93 und als Druckspeicherventil 250, in Form eines Magnet-Wegeventils gebildet sind; nämlich als ein 2/2-Magnet-Wegeventil. Die als Magnet-Wegeventile ausgebildeten Balg- oder Druckspeicherventile 93, 250 sind über eine Galerie 95 miteinander verbunden, wobei die Galerie 95 über eine weitere Versorgungsleitung 96 an die pneumatische Hauptleitung 60 über den Druckluftanschluss 2 angebunden ist.

Zum Betrieb der Pneumatikanlage 90 lassen sich -- je nach gemessenem Höhenniveau-- die Luftfedern bildenden Bälge 91 aus der Druckluftversorgungsanlage 10 mit Druckluft über den Druckluftanschluss 2 befüllen; dies dient der Niveauanhebung des Aufbaus des Fahrzeugs 1000. Umgekehrt lassen sich die Luftbälge 91 über den Druckluftanschluss 2 in Gegenrichtung entlüften zu einem Entlüftungsanschluss 3, so dass sich das Niveau des Fahrzeugaufbaus 200 unter Entweichen von Druckluft aus den Federbälgen 91 senkt. Zum Befüllen der Pneumatikanlage 90 über den Druckluftanschluss 2 befindet sich das Entlüftungsventil 240 in der vorliegend gezeigten, strom- bzw. drucklos geschlossenen Förderstellung. Ebenso ist der dritte und vierte pneumatische Anschluss X3, X4 pneumatisch getrennt, d. h. der erste Teil 70.1 der Entlüftungsleitung 70 gegen den zweiten Teil 70.2 der Entlüftungsleitung 70 geschlossen.

Zum Entlüften der Pneumatikanlage 90 wird eine geeignete Bestromung der Magnetspule des Vorsteuerventils 34 mittels einem über eine hier nicht dargestellte Leitung geführten Stromsignal vorgenommen; als Folge wird die Magnetspule des Vorsteuerventils 34 bestromt und gegen den Federdruck einer Steuer-Ventilfeder 35 geöffnet. Damit wird die Steuerleitung 36 über das Vorsteuerventil 34 geöffnet, d. h. der erste Teil 36.1 der Steuerleitung 36 wird mit dem zweiten Teil 36.2 der Steuerleitung 36 zum Vorsteueranschluss 240.1 verbunden. Ein in der Steuerleitung 36 anliegender Steuerdruck wird am Vorsteueranschluss 240.1 aufgebaut und wirkt gegen die Kraft der Entlüftungs-Ventilfeder 244 des Entlüftungsventils 240; öffnet schließlich den dritten pneumatischen Anschluss X3 zum vierten pneumatischen Anschluss X4 des Entlüftungsventils 242; also die Entlüftungsleitung 70 und einen Ausgang des Lufttrockners 61 zum Entlüftungsanschluss 3. Der erste pneumatische Anschluss X1 wird gleichzeitig mit dem zweiten pneumatischen Anschluss X2 verbunden, sodass die sperrende Wirkung des Rückschlagventils R im Entlüftungsventil 240 aufgehoben ist. Bei derart geöffneten Ventilanschlüssen X3, X4 des Entlüftungsventils 240 in der Entlüftungsleitung 70 wird vorliegend der Vorsteueranschluss 240.1 unter Steuerdruck gehalten.

Diese Anordnung aus Vorsteuerventil 34 mit Steuerleitung 36 zum Vorsteueranschluss 240.1 des Entlüftungsventils 240, Vorsteuer-Druckspeicher 320a, Druckspeicher-Rückschlagventil 322a, Speicherverbindung 324a und dem Entlüftungsventil 240 wird nachfolgend auch als druckhaltende pneumatische Reservoireinrichtung 300a bezeichnet bzw. analog in den weiteren Figuren als druckhaltende pneumatische Reservoireinrichtung 300a, 300b, 300c, 300d - durch die druckhaltende pneumatische Reservoireinrichtung 300a, 300b, 300c, 300d --insbesondere auch bei einem gegebenenfalls während des Entlüftungsvorgangs in der Hauptleitung 60 abfallenden Luftdrucks-- wird der Vorsteueranschluss 240.1 unter Steuerdruck gehalten.

Darüber hinaus ist gemäß dem Konzept der vorliegenden Erfindung in den im weiteren erläuterten Ausführungsformen vorgesehen, dass bei geöffneten pneumatischen Anschlüssen X3, X4 des Entlüftungsventils 240 in der Entlüftungsleitung 70 der Vorsteueranschluss 240.1 unter Steuerdruck gehalten wird; dies unabhängig von einem Druck in der Entlüftungsleitung 70 und der pneumatischen Hauptleitung 60. Insbesondere kann mittels einer druckhaltende pneumatische Reservoireinrichtung 300a, 300b, 300c, 300d der Steuerdruck gehalten werden, obwohl ein Druck in der Entlüftungsleitung 70 und in der pneumatischen Hauptleitung 60 unter einen Resthaltedruck, d. h. einen durch die Entlüftungs-Ventilfeder 244 zur Betätigung des Entlüftungsventils 240 vorgegebenen Druck absinken kann. So ist gemäß allen im Folgenden erläuterten Ausführungsformen gewährleistet, dass der Druck in der Entlüftungsleitung 70 und der pneumatischen Hauptleitung 60 praktisch bis auf einen Umgebungsdruck absinken kann, sodass die Federbälge 91 bis auf einen Umgebungsdruck entlüftet werden können.

Bezugnehmend auf Fig. 1 wird zum Entlüften die Spule des als 3/2-Ventil ausgebildeten Vorsteuerventils 34 bestromt und das Vorsteuerventil 34 geht von dem in Fig. 1 gezeigten stromlosen Zustand in den bestromten Zustand über, bei dem der erste Vorsteuerventil-Anschluss Y1 mit dem zweiten Vorsteuerventil-Anschluss Y2 pneumatisch verbunden ist; d. h. der erste Teil der Steuerleitung 36.1 und der zweite Teil 36.2 der Steuerleitung 36 sind zum Vorsteueranschluss 240.1 miteinander verbunden. Im Gegensatz dazu ist im stromlosen Zustand des Vorsteuerventils 34 der zweite Vorsteuerventil-Anschluss Y2 mit dem dritten Vorsteuerventil-Anschluss Y3 pneumatisch verbunden, wodurch eine Verbindung zwischen dem ersten Teil der Steuerleitung 36.1 und einer Steuerentlüftungsleitung 37, welche weiter mit der Entlüftungsleitung 70 verbunden ist, hergestellt wird.

Die in Fig. 1 gezeigte Weiterbildung eines pneumatischen Systems 100a weist eine druckhaltende pneumatische Reservoireinrichtung 300a mit einem Vorsteuer-Druckspeicher 320a auf, wobei der Vorsteuer-Druckspeicher 320a mit dem dritten Teil 36.3 der Steuerleitung 36 pneumatisch verbunden ist. Der Vorsteuer-Druckspeicher 320a ist weiter über eine Speicherverbindung 324a mit dem Druckspeicher 120 pneumatisch verbunden, jedoch aufgrund eines in der Speicherverbindung 324a angeordneten Druckspeicher-Ventils 322, das vorliegend als Druckspeicher-Rückschlagventil 322a ausgebildet ist, nur in die Strömungsrichtung vom Druckspeicher 120 zum Vorsteuer-Druckspeicher 320a. Entsprechend ist die Strömungsrichtung vom Vorsteuer-Druckspeicher 320a zum Druckspeicher 120 gesperrt. Hierdurch wird vorteilhaft bewirkt, das bei einem Befüllen des Druckspeichers 120 durch den Verdichter 21 (oder auch durch ein Ablassen von Druckluft aus der Federbälgen 91) nicht nur Druckluft in der Druckspeicher 120 strömt, sondern weiter über die Speicherverbindung 324a ebenfalls in den Vorsteuer-Druckspeicher 320a. Auf diese Weise wird Druckluft in dem Vorsteuer-Druckspeicher 320a gespeichert, welche insbesondere ausschließlich zur Beaufschlagung der Steuerleitung 36 und somit des Entlüftungsventils 240 genutzt wird. Aufgrund des Druckspeicher-Rückschlagventils 322a bleibt die Druckluft in dem Vorsteuer-Druckspeicher 320a auch dann enthalten, wenn der Druckspeicher 120, beispielsweise zur Versorgung der Pneumatikanlage 90, entleert wird. In dieser Weiterbildung ist weiterhin die Rückführleitung 86, welche vorliegend ausschließlich zur Aufladung des Verdichters 71 verwendet wird, und die Steuerleitung 36 vollständig voneinander getrennt.

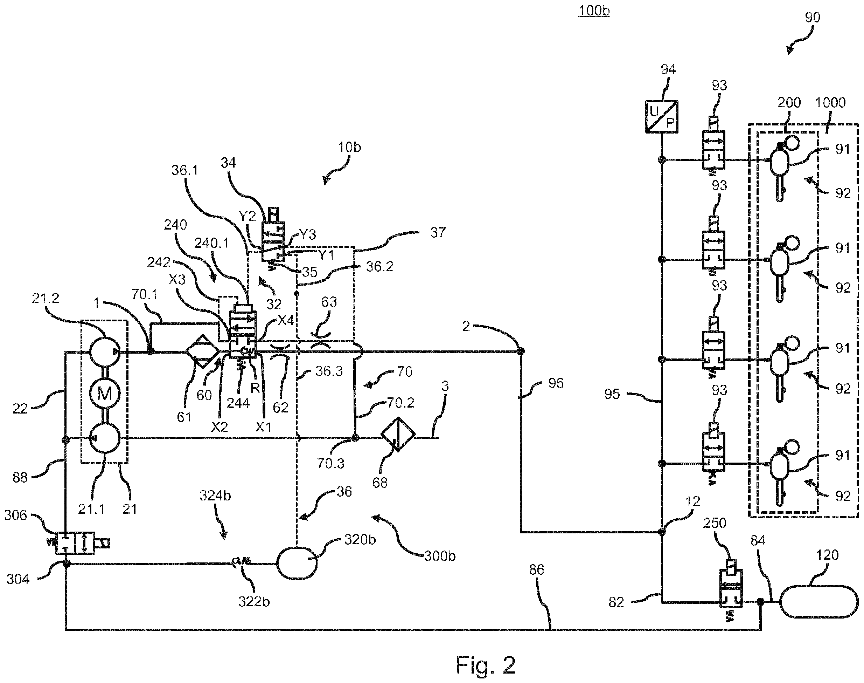

Fig. 2 zeigt ein pneumatisches System 100b einer weiteren Weiterbildung der Erfindung. Das hier gezeigte pneumatische System 100b unterscheidet sich im Wesentlichen von der in Fig. 1 gezeigten Weiterbildung dadurch, dass ein Vorsteuer-Druckspeicher 320b zwischen dem Abzweigpunkt 304 und der Steuerleitung 36, insbesondere in der Druckluftversorgungsanlage 10b, insbesondere in oder an dem Vorsteuerventil 34 oder in oder an dem Lufttrockner 61, angeordnet ist. Hierzu ist der Vorsteuer-Druckspeicher 320b über eine Speicherverbindung 324b pneumatisch mit dem Abzweigpunkt 304 verbunden. Weiterhin ist der Vorsteuer-Druckspeicher 320b pneumatisch mit dem dritten Teil 36.3 der Steuerleitung 36 verbunden. Auf diese Weise kann der Vorsteuer-Druckspeicher 320b über die Rückführleitung 86 vom Druckspeicher 120 befüllt werden. Die Rückführleitung 86 kann ebenfalls zum Aufladen des Verdichters 21 verwendet werden. Aufgrund eines in der Speicherverbindung 324b angeordneten Rückschlagventils 322b wird vorteilhaft, analog zu der in Fig. 1 gezeigten Weiterbildung, eine für die Beaufschlagung des Vorsteueranschlusses 240.1 vorgesehene Druckluftmenge im Vorsteuer-Druckspeicher 320b bereitgehalten, und zwar auch, wenn der Druck nach einem Befüllen des Druckspeichers in der Rückführleitung 86 und/oder dem Druckspeicher 120 wieder abfällt.

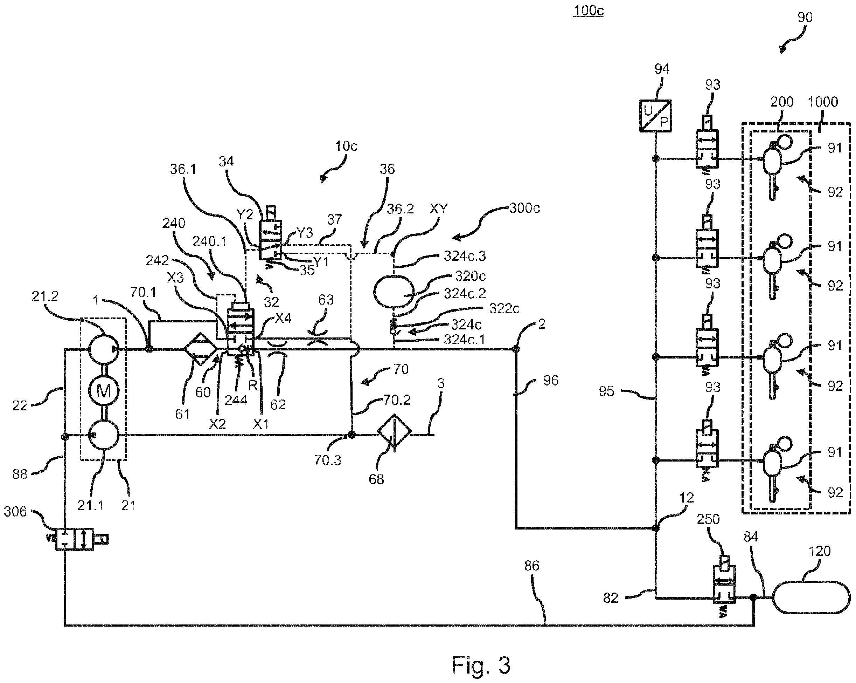

Fig. 3 zeigt eine weitere, besonders bevorzugte Weiterbildung der Erfindung. Ein in Fig. 3 dargestelltes pneumatisches System 100c unterscheidet sich von den in Fig. 1 und 2 dargestellten Weiterbildungen im Wesentlichen dadurch, dass der Vorsteuer-Druckspeicher 320c einer druckhaltenden Reservoireinrichtung 300c derart angeordnet ist, dass er die pneumatische Hauptleitung 60 mit dem zweiten Teil 36.2 der Steuerleitung 36 pneumatisch verbindet. Hierzu ist der Vorsteuer-Druckspeicher 320c über eine Speicherverbindung 324c mit der pneumatischen Hauptleitung 60 pneumatisch verbunden. Die Speicherverbindung 324c weist dabei, analog zu den in Fig. 1 und 2 dargestellten Weiterbildungen, ein Druckspeicher-Rückschlagventil 322c auf, um die Durchströmungsrichtung der Speicherverbindung 324c in nur eine Richtung zu erlauben, nämlich von der pneumatischen Hauptleitung 60 zum Vorsteuer-Druckspeicher 320c. Hierzu ist das Druckspeicher-Rückschlagventil 322c zwischen einem ersten Teil 324c.1 und einem zweiten Teil 324c.2 der Speicherverbindung 324c angeordnet. Ein dritter Teil 324c.3 der Speicherverbindung 324c verbindet weiterhin den Vorsteuer-Druckspeicher 320c an einem Leitungsanschluss XY mit dem zweiten Teil 36.2 der Steuerleitung 36. In einer derartigen Weiterbildung wird der Vorsteuer-Druckspeicher 320c befüllt, wenn der Druck in der pneumatischen Hauptleitung 60 höher ist als der Gegendruck des Druckspeicher-Rückschlagventils 322c und/oder als der im Vorsteuer-Druckspeicher 320c bereits herrschende Druck. Durch das Druckspeicher-Rückschlagventil 320c wird vorteilhaft erreicht, dass der Druck in dem Vorsteuer-Druckspeicher 320c nach dem Befüllen auch dann gehalten wird, wenn der Druck in der pneumatischen Hauptleitung 60 wieder abfällt. Insbesondere bei der Ausführungsform der Fig.3 wird der Druck im Vorsteuer-Druckspeicher 320c zwischen dem Rückschlagventil 322c und dem Vorsteuerventil 34, dort Anschluss Y1, eingesperrt und gespeichert und nur bei geschaltetem Vorsteuerventil 34 wird eine geringe Menge der gespeicherten Druckluft zum Vorsteueranschluss 240.1 des Vorsteuerventils 240 überführt, um dieses zu Schalten. Der Druck im Vorsteuer-Druckspeicher 320c entspricht damit also dem vormals höchsten Druck in der Hauptleitung 60.

Durch den damit vorliegenden, höheren Druck kann die wirksame Fläche des Vorsteuerraumes bzw. der Steuerkammer 246 kleiner ausgeführt werden, ohne die resultierende Öffnungskraft zu beeinflussen. Zum Beispiel erlaubt eine Verdoppelung des Vorsteuerdrucks eine Reduzierung des wirksamen Durchmessers auf 70 %. Weiterhin ist in dieser Weiterbildung die Funktion der druckhaltenden Reservoireinrichtung 300c unabhängig vom Druckspeicher 120 und insbesondere von der Rückführleitung 86 und Aufladeleitung 88.

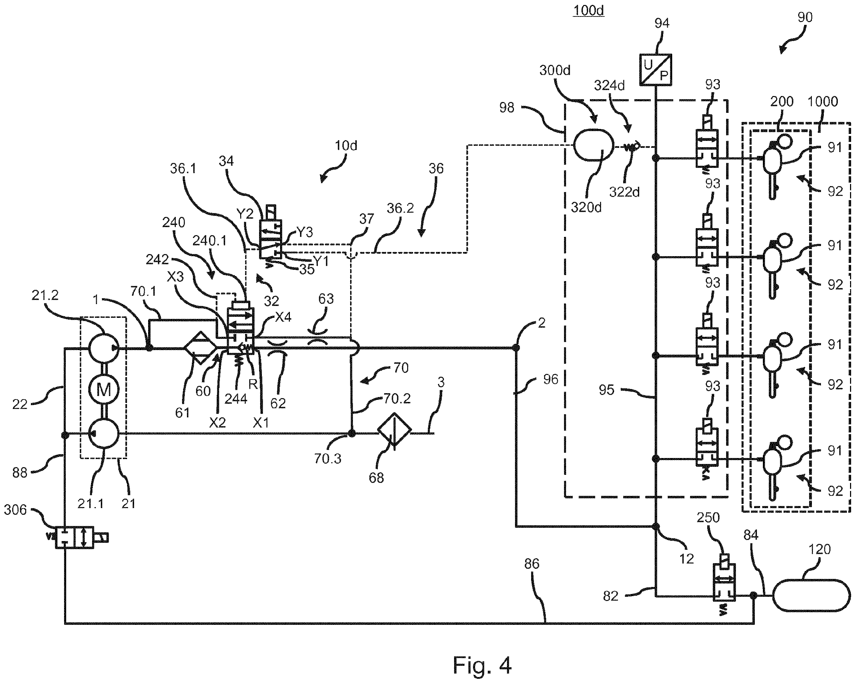

Fig. 4 zeigt eine weitere bevorzugte Weiterbildung der Erfindung, wobei ein Vorsteuer-Druckspeicher 320d mit einer Speicherverbindung 324d an die Galerie 95 angeschlossen ist. Der Druckspeicher ist über einen zweiten Teil 36.2 einer Steuerleitung 36 mit dem ersten Vorsteuerventil-Anschluss Y1 des Vorsteuerventils 34 verbunden. Analog zu den in Fig. 1 bis Fig. 3 gezeigten Weiterbildungen weist die vorliegende Weiterbildung in ihrer Speicherverbindung 324d ebenfalls ein Druckspeicher-Rückschlagventil 322d auf. Durch das Druckspeicher-Rückschlagventil 322d wird sichergestellt, dass der Vorsteuer-Druckspeicher 320d befüllt wird, wenn der Druck in der Galerie 95 höher ist als der Gegendruck des Druckspeicher-Rückschlagventils 322d und/oder als der im Vorsteuer-Druckspeicher 320d bereits herrschende Druck. Durch das Druckspeicher-Rückschlagventil 320d wird vorteilhaft erreicht, dass der Druck in dem Vorsteuer-Druckspeicher 320d nach dem Befüllen auch dann gehalten wird, wenn der Druck in der Galerie 95 wieder abfällt. Insbesondere ist es in dieser Weiterbildung möglich, wenn auch nicht notwendig, den Vorsteuer-Druckspeicher 320d und die Speicherverbindung 324d in einen Magnetventilblock 98 zu integrieren, sodass diese mit den Wegeventilen 93 und einem Teil der Galerie 95 eine bauliche Einheit bilden.

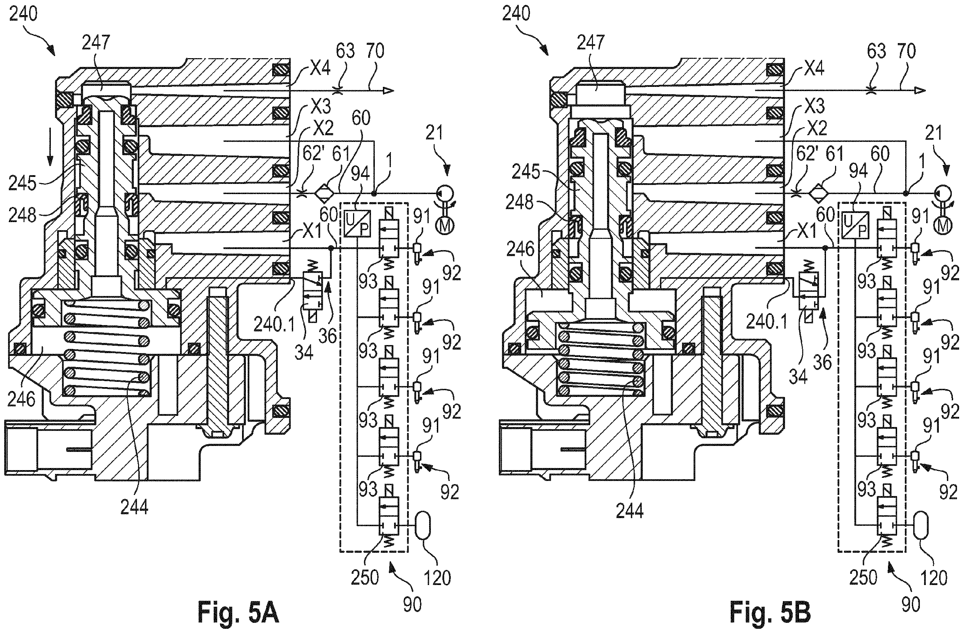

Fig. 5A zeigt ein Entlüftungsventil 240 in der Förderstellung, das heißt wenn ein Verdichter 21 Luft, insbesondere zwecks Verwendung in einem pneumatischen System 90, verdichtet. Hierzu wird die vom Verdichter 21 verdichtete Luft über eine pneumatische Hauptleitung 60 und einen Lufttrockner 61 zum zweiten pneumatischen Anschluss X2 geführt. Von dort gelangt die Luft in den Entlüftungs-Ventilzylinder 247, wo sie, vorbei an einem Entlüftungs-Ventilkolben 245, und insbesondere an einem Dichtring 248, zum ersten pneumatischen Anschluss X1 strömt. Die Anordnung von Entlüftungs-Ventilkolben 245, Entlüftungs-Ventilzylinder 247 und Dichtring 248 ist derart, dass Luft vom zweiten pneumatischen Anschluss X2 zum ersten pneumatischen Anschluss X1 strömen kann, jedoch nicht umgekehrt vom ersten pneumatischen Anschluss X1 zum zweiten pneumatischen Anschluss X2. Somit wird mit dieser Anordnung die Funktion eines Rückschlagventils erfüllt. Von dort gelangt die Luft weiter auf die pneumatische Hauptleitung 60 und schließlich, stark vereinfacht dargestellt, zur Pneumatikanlage 90. An dem hier dargestellten Abschnitt der pneumatischen Hauptleitung 60 zwischen dem ersten pneumatischen Anschluss X1 und der Pneumatikanlage 90 ist vorliegend eine Abzweigung zur Steuerleitung 36 angeordnet. Die Steuerleitung 36 stellt eine pneumatische Verbindung zwischen der pneumatischen Hauptleitung 60 und dem Vorsteueranschluss 240.1 des Entlüftungsventils 240 her, wobei diese pneumatische Verbindung durch ein in der Steuerleitung 36 angeordnetes und als Magnetventil ausgebildetes Vorsteuerventil 34 selektiv geschlossen und unterbrochen werden kann. Aus Gründen der Vereinfachung wird in den Figuren 5A und 5B auf die Darstellung einer druckhaltenden pneumatischen Reservoireinrichtung gemäß dem Konzept der Erfindung verzichtet.

Vorteilhaft können die zu den Anschlüssen X1 bis X4 führenden Leitungen gedrosselt werden, wie vorliegend durch eine in der Leitung zum zweiten pneumatischen Anschluss X2 des Entlüftungsventils 240 angeordnete erste Drossel 62' und eine in der Leitung zum vierten pneumatischen Anschluss X4 angeordnete zweite Drossel 63.

Weiterhin ist in der Förderstellung die Stellung des Entlüftung-Ventilkolbens 245 innerhalb des Entlüftung-Ventilzylinders 247 derart, dass die Durchströmung von einem dritten pneumatischen Anschluss X3 zu einem vierten pneumatischen Anschluss X4 gesperrt ist. Auf diese Weise ist die pneumatische Verbindung zwischen der Druckluftzuführung 1 und der Entlüftungsleitung 70 getrennt.

In Fig. 5B ist das Entlüftungsventil 240 in einer Regenerations- bzw. Entlüftungsstellung dargestellt. In der Regenerations-/Entlüftungsstellung ist das Vorsteuerventil 34 derart geöffnet, dass Luft in den Vorsteueranschluss 240.1 gelangen kann und von dort weiter in eine Steuerkammer 246. Die in die Steuerkammer 246 strömende Druckluft führt dazu, dass sich der Entlüftungs-Ventilkolben 245 gegen die Rückstellkraft einer Entlüftungs-Ventilfeder 244 nach unten bewegt. In dieser Stellung des Entlüftungs-Ventilkolbens 245 kann Luft sowohl vom ersten pneumatischen Anschluss X1 zum zweiten pneumatischen Anschluss X2 als auch umgekehrt vom zweiten pneumatischen Anschluss X2 zum ersten pneumatischen Anschluss X1 strömen. Gleichzeitig kann Luft sowohl vom dritten pneumatischen Anschluss X3 zum vierten pneumatischen Anschluss X4 als auch umgekehrt vom vierten pneumatischen Anschluss X4 zum dritten pneumatischen Anschluss X3 strömen.

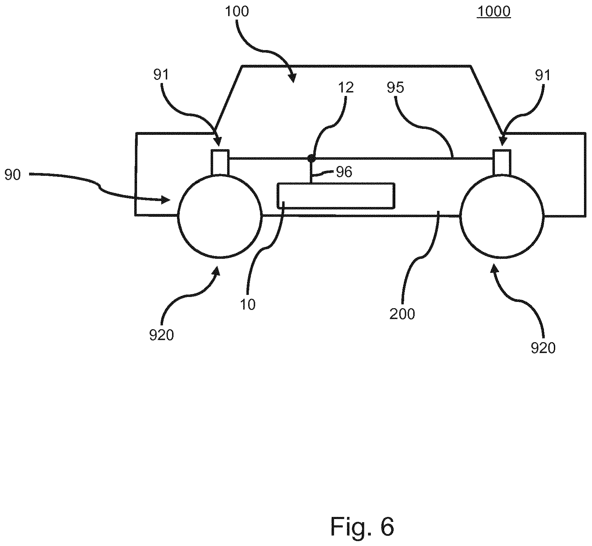

Fig. 6 zeigt eine schematische Darstellung eines Fahrzeugs 1000 --vorliegend in Form eines PKW-- mit einem Fahrzeugaufbau 200, aufweisend ein pneumatisches System 100 mit einer Druckluftversorgungsanlage 10 und einer als Luftfederanlage ausgebildeten Pneumatikanlage 90. Insbesondere bei Fahrzeugen im PKW-Bereich ist eine schnelle Bereitstellung von Druckluft zur Niveauregelung im Betrieb von großer Bedeutung, da Pausen, insbesondere zur Durchführung einer Luftdruckmessung, vom Fahrer des Fahrzeugs wahrnehmbar sind. Das hier deswegen, ohne Einschränkung der Anwendbarkeit auch für LKWs oder andere Nutzfahrzeuge, beispielhaft dargestellte PKW-Fahrzeug 1000 verfügt über vier Räder 920, von denen hier aufgrund der Schnittdarstellung die zwei einer Fahrzeugseite zugeordneten Räder gezeigt sind. Analog zur Anzahl der Räder verfügt die Luftfederanlage 90 über vier Luftfedern 92, von denen hier analog zu den Rädern aufgrund der Schnittdarstellung die zwei einer Fahrzeugseite zugeordneten Bälgen gezeigt sind. Die vier Luftfedern 92, die jeweils den vier Rädern 920 zugeordnet sind, werden als Teil der Luftfederanlage 90 von der Druckluftversorgungsanlage 10 mit Druckluft versorgt. Die Druckluftversorgungsanlage 10 ist über die Versorgungsleitung 96, den Galeriehauptanschluss 12 und die Galerie 95 mit den Komponenten der Pneumatikanlage 90, in diesem Falle den vier Luftfedern 92, fluidführend verbunden.

### Bezugszeichenliste (Bestandteil der Beschreibung)

- 1: Druckluftzuführung
- 2: Druckluftanschluss
- 3: Entlüftungsanschluss
- 10, 10a - d: Druckluftversorgungsanlage
- 12: Galeriehauptanschluss
- 21: Verdichteranordnung, Verdichter
- 21.1: Niederdruckstufe
- 21.2: Hochdruckstufe
- 22: Zwischenleitung
- 32: Vorsteuerkanal
- 34: Vorsteuerventil
- 35: Steuer-Ventilfeder
- 36: Steuerleitung
- 36.1: Erster Teil der Steuerleitung
- 36.2: Zweiter Teil der Steuerleitung
- 36.3: Dritter Teil der Steuerleitung
- 36.4: Vierter Teil der Steuerleitung
- 37: Steuerentlüftungsleitung
- 60: pneumatische Hauptleitung
- 61: Lufttrockner
- 62, 62': Erste Drossel
- 63: Zweite Drossel
- 68: Luftfilter
- 70: Entlüftungsleitung
- 70.1: Erster Teil der Entlüftungsleitung
- 70.2: Zweiter Teil der Entlüftungsleitung
- 70.3: Anschlusspunkt
- 82: Druckspeicher-Zuleitung
- 84: Speicherleitung
- 86: Rückführleitung
- 88: Aufladeleitung
- 90: Luftfederanlage, Pneumatikanlage
- 91: Federbalg, Balg
- 92: Luftfeder
- 93: Wegeventil
- 94: Drucksensor
- 95: Galerie
- 96: Versorgungsleitung
- 98: Magnetventilblock
- 100, 100a - d: Pneumatisches System
- 120: Druckspeicher
- 200: Fahrzeugaufbau
- 240: Entlüftungsventil
- 240.1: Vorsteueranschluss des Entlüftungsventils
- 242: Zweiter Vorsteueranschluss des Entlüftungsventils
- 244: Entlüftungs-Ventilfeder
- 245: Entlüftungs-Ventilkolben
- 246: Steuerkammer
- 247: Entlüftungs-Ventilzylinder
- 248: Dichtring
- 250: Druckspeicher-Ventil
- 300, 300a - 300d: druckhaltende pneumatische Reservoireinrichtung
- 304: Abzweigpunkt
- 306: Aufladeventil
- 320a - d,: Vorsteuer-Druckspeicher, zweiter Druckspeicher
- 322: Druckspeicher-Ventil
- 322a - d: Druckspeicher-Rückschlagventil
- 324a - d: Speicherverbindung
- 324c.1 - 324c.3: Erster bis dritter Teil der Speicherverbindung
- 400: Einrichtung zum Steuern- und Regeln des pneumatischen Systems
- 920: Rad
- 1000: Fahrzeug
- M: Motor
- R: Rückschlagventil des Entlüftungsventils
- X1: Erster pneumatischer Anschluss des Entlüftungsventils
- X2: Zweiter pneumatischer Anschluss des Entlüftungsventils
- X3: Dritter pneumatischer Anschluss des Entlüftungsventils
- X4: Vierter pneumatischer Anschluss des Entlüftungsventils
- XY: Leitungsanschluss
- Y1: Erster Vorsteuerventil-Anschluss
- Y2: Zweiter Vorsteuerventil-Anschluss
- Y3: Dritter Vorsteuerventil-Anschluss

## Patentansprüche

1. Druckluftversorgungsanlage (10a, 10b, 10c, 10d), zum Betreiben einer Pneumatikanlage (90) in einem pneumatischen System (100a, 100b, 100c, 100d) eines Fahrzeugs (1000), aufweisend:
- eine Druckluftzuführung (1);
- einen Druckluftanschluss (2) zur Pneumatikanlage (90);
- einen Entlüftungsanschluss (3) zur Umgebung;
- eine pneumatische Hauptleitung (60) zwischen der Druckluftzuführung (1) und dem Druckluftanschluss (2), die einen Lufttrockner (61) aufweist;
- ein auf der pneumatischen Hauptleitung (60) angeordnetes, als Vorsteuerventil ausgebildetes Entlüftungsventil (240), mit einem Vorsteueranschluss (240.1),
- einen mindestens eine Verdichterstufe (21.1, 21.2) aufweisenden Verdichter (21),
- zusätzlich zur pneumatischen Hauptleitung (60), ein Vorsteuerventil (34) und einen pneumatischen Vorsteuerkanal (32), der das Vorsteuerventil (34) mit dem Vorsteueranschluss (240.1) des Entlüftungsventils (240) pneumatisch verbindet,
**dadurch gekennzeichnet, dass**
- an den Vorsteueranschluss (240.1) eine druckhaltende pneumatische Reservoireinrichtung (300a, 300b, 300c, 300d) angeschlossen ist, die ausgebildet ist, einen Steuerdruck für den Vorsteueranschluss (240.1) bereitzustellen,
- unabhängig von einem Druck in der pneumatischen Hauptleitung (60) während eines Entlüftens des pneumatischen Systems (100a, 100b, 100c, 100d), und
- die druckhaltende pneumatische Reservoireinrichtung (300a, 300b, 300c, 300d) mindestens einen separaten Vorsteuer-Druckspeicher (320a, 320b, 320c, 320d) aufweist, der über eine Steuerleitung (36) pneumatisch mit dem Vorsteueranschluss (240.1) verbindbar ist.

2. Druckluftversorgungsanlage (10a, 10b, 10c, 10d) nach Anspruch 1, **dadurch gekennzeichnet, dass** der Vorsteuer-Druckspeicher (320c) über eine Speicherverbindung (324c) mit der pneumatischen Hauptleitung (60) pneumatisch verbindbar ist.

3. Druckluftversorgungsanlage (10a, 10b, 10c, 10d) nach Anspruch 1, **dadurch gekennzeichnet, dass** der Vorsteuer-Druckspeicher (320a, 320b) über eine Speicherverbindung (324a, 324b) mit einem Druckspeicher (120) pneumatisch verbindbar ist.

4. Druckluftversorgungsanlage (10a, 10b, 10c, 10d) nach Anspruch 1, **dadurch gekennzeichnet, dass** der Vorsteuer-Druckspeicher (320d) über eine Speicherverbindung (324d) mit einer Galerie (98) pneumatisch verbindbar ist.

5. Druckluftversorgungsanlage (10a, 10b, 10c, 10d) nach einem der Ansprüche 2 bis 4, **dadurch gekennzeichnet, dass** in der Speicherverbindung (324a, 324b, 324c, 324d) ein in Richtung des Vorsteuer-Druckspeichers (320a, 320b, 320c, 320d) öffnendes und in entgegengesetzte Richtung sperrendes Druckspeicher-Ventil (322), insbesondere ein Druckspeicher-Rückschlagventil (322a, 322b, 322c, 322d), angeordnet ist.

6. Druckluftversorgungsanlage (10a, 10b, 10c, 10d) nach einem der Ansprüche 1 bis 4, **dadurch gekennzeichnet, dass** die druckhaltende pneumatische Reservoireinrichtung (300a, 300b, 300c, 300d) vollständig oder teilweise in die Druckluftversorgungsanlage (10a, 10b, 10c, 10d) integriert ist, insbesondere eine bauliche Einheit mit dieser bildet.

7. Druckluftversorgungsanlage (10d) nach Anspruch 5, **dadurch gekennzeichnet, dass** die druckhaltende pneumatische Reservoireinrichtung (300d) vollständig oder teilweise in einen Magnetventilblock (98) integriert ist.

8. Verfahren zum Betreiben einer Druckluftversorgungsanlage (10a, 10b, 10c, 10d) nach einem der Ansprüche 1 bis 7, wobei die Druckluftversorgungsanlage (10a, 10b, 10c, 10d) zum Betreiben einer Pneumatikanlage (90) in einem pneumatischen System (100a, 100b, 100c, 100d) eines Fahrzeugs (1000) eingesetzt wird und eine druckhaltende pneumatische Reservoireinrichtung (300a, 300b, 300c, 300d) mit mindestens einem separaten Vorsteuer-Druckspeicher (320a, 320b, 320c, 320d) aufweist, aufweisend die Schritte:
- Verdichten von Druckluft,
- Versorgen des pneumatischen Systems (100a, 100b, 100c, 100d), insbesondere der Pneumatikanlage (90) und/oder eines Druckspeichers (120) und/oder einer Galerie (95) mit Druckluft,
- Befüllen des Vorsteuer-Druckspeichers (320a, 320b, 320c, 320d),
- Betreiben der Pneumatikanlage (90),
- Entlüften des pneumatischen Systems (100a, 100b, 100c, 100d) über ein als Vorsteuerventil ausgebildetes Entlüftungsventil (240), mit einem Vorsteueranschluss (240.1),
wobei
- eine an den Vorsteueranschluss (240.1) angeschlossene druckhaltende pneumatische Reservoireinrichtung (300a, 300b, 300c, 300d) den Vorsteueranschluss (240.1) unter Steuerdruck hält,
- unabhängig von einem Druck in der pneumatischen Hauptleitung (60) während eines Entlüftens des pneumatischen Systems (100a, 100b, 100c, 100d),
- der Vorsteuer-Druckspeicher (320a, 320b, 320c, 320d) über die Steuerleitung (36) zum Betätigen des Entlüftungsventils (240) pneumatisch mit dem Vorsteueranschluss (240.1) verbunden wird.

9. Verfahren nach Anspruch 8, **dadurch gekennzeichnet, dass** der Vorsteuer-Druckspeicher (320a, 320b, 320c, 320d) selbstständig befüllt wird.

10. Verfahren nach Anspruch 8 oder 9, **dadurch gekennzeichnet, dass** die druckhaltende pneumatische Reservoireinrichtung (300, 300a, 300b, 300c, 300d) über die Hauptleitung (60) und/oder den Druckspeicher (120) und/oder die Galerie (95) befüllt wird.

11. Fahrzeug (1000) mit einem pneumatischen System (100) und einer Druckluftversorgungsanlage (10) nach einem der vorherigen Ansprüche 1 bis 7, insbesondere zur Durchführung eines Verfahrens nach einem der Ansprüche 8 bis 10.

## Claims

1. A compressed air supply installation (10a, 10b, 10c, 10d) for operating a pneumatic installation (90) in a pneumatic system (100a, 100b, 100c, 100d) of a vehicle (1000), comprising:
- a compressed air supply (1);
- a compressed air port (2) to the pneumatic installation (90);
- a vent port (3) to the environment;
- a pneumatic main line (60) between the compressed air supply (1) and the compressed air port (2), which main line comprises an air dryer (61);
- a vent valve (240) which is arranged on the pneumatic main line (60), is designed as a pilot control valve and has a pilot control port (240.1),
- a compressor (21) comprising at least one compressor stage (21.1, 21.2),
- in addition to the pneumatic main line (60), a pilot control valve (34) and a pneumatic pilot control channel (32) which pneumatically connects the pilot control valve (34) to the pilot control port (240.1) of the vent valve (240),
**characterized in that**
- a pressure-maintaining pneumatic reservoir device (300a, 300b, 300c, 300d) is connected to the pilot control port (240.1), which device is designed to provide a control pressure for the pilot control port (240.1),
- irrespective of a pressure in the pneumatic main line (60) during venting of the pneumatic system (100a, 100b, 100c, 100d), and
- the pressure-maintaining pneumatic reservoir device (300a, 300b, 300c, 300d) comprises at least one separate pilot control pressure accumulator (320a, 320b, 320c, 320d) which can be pneumatically connected to the pilot control port (240.1) via a control line (36).

2. The compressed air supply installation (10a, 10b, 10c, 10d) according to claim 1, **characterized in that** the pilot control pressure accumulator (320c) can be pneumatically connected to the pneumatic main line (60) via an accumulator connection (324c).

3. The compressed air supply installation (10a, 10b, 10c, 10d) according to claim 1, **characterized in that** the pilot control pressure accumulator (320a, 320b) can be pneumatically connected to a pressure accumulator (120) via an accumulator connection (324a, 324b).

4. The compressed air supply installation (10a, 10b, 10c, 10d) according to claim 1, **characterized in that** the pilot control pressure accumulator (320d) can be pneumatically connected to a gallery (98) via an accumulator connection (324d).

5. The compressed air supply installation (10a, 10b, 10c, 10d) according to any of claims 2 to 4, **characterized in that** a pressure accumulator valve (322), in particular a pressure accumulator non-return valve (322a, 322b, 322c, 322d), which opens in the direction of the pilot control pressure accumulator (320a, 320b, 320c, 320d) and blocks in the opposite direction, is arranged in the accumulator connection (324a, 324b, 324c, 324d).

6. The compressed air supply installation (10a, 10b, 10c, 10d) according to any of claims 1 to 4, **characterized in that** the pressure-maintaining pneumatic reservoir device (300a, 300b, 300c, 300d) is completely or partially integrated into the compressed air supply installation (10a, 10b, 10c, 10d), in particular forms a structural unit therewith.

7. The compressed air supply installation (10d) according to claim 5, **characterized in that** the pressure-maintaining pneumatic reservoir device (300d) is completely or partially integrated into a solenoid valve block (98).

8. A method for operating a compressed air supply installation (10a, 10b, 10c, 10d) according to any of claims 1 to 7, wherein the compressed air supply installation (10a, 10b, 10c, 10d) is used for operating a pneumatic installation (90) in a pneumatic system (100a, 100b, 100c, 100d) of a vehicle (1000) and comprises a pressure-maintaining pneumatic reservoir device (300a, 300b, 300c, 300d) having at least one separate pilot control pressure accumulator (320a, 320b, 320c, 320d), the method comprising the steps of:
- compressing compressed air,
- supplying the pneumatic system (100a, 100b, 100c, 100d), in particular the pneumatic installation (90) and/or a pressure accumulator (120) and/or a gallery (95), with compressed air,
- filling the pilot control pressure accumulator (320a, 320b, 320c, 320d),
- operating the pneumatic installation (90),
- venting the pneumatic system (100a, 100b, 100c, 100d) via a vent valve (240) which is designed as a pilot control valve and has a pilot control port (240.1),
wherein
- a pressure-maintaining pneumatic reservoir device (300a, 300b, 300c, 300d) connected to the pilot control port (240.1) keeps the pilot control port (240.1) under control pressure,
- irrespective of a pressure in the pneumatic main line (60) during venting of the pneumatic system (100a, 100b, 100c, 100d),
- the pilot control pressure accumulator (320a, 320b, 320c, 320d) is pneumatically connected to the pilot control port (240.1) via the control line (36) for actuating the vent valve (240).

9. The method according to claim 8, **characterized in that** the pilot control pressure accumulator (320a, 320b, 320c, 320d) is automatically filled.

10. The method according to claim 8 or claim 9, **characterized in that** the pressure-maintaining pneumatic reservoir device (300, 300a, 300b, 300c, 300d) is filled via the main line (60) and/or the pressure accumulator (120) and/or the gallery (95).

11. A vehicle (1000) comprising a pneumatic system (100) and a compressed air supply installation (10) according to any of the preceding claims 1 to 7, in particular for carrying out a method according to any of claims 8 to 10.

## Revendications

1. Installation de production d'air comprimé (10a, 10b, 10c, 10d), pour faire fonctionner une installation pneumatique (90) dans un système pneumatique (100a, 100b, 100c, 100d) d'un véhicule (1000), présentant :
- une alimentation en air comprimé (1) ;
- un raccord d'air comprimé (2) vers l'installation pneumatique (90) ;
- un raccord de purge d'air (3) vers l'environnement ;
- une conduite pneumatique principale (60) entre l'alimentation en air comprimé (1) et le raccord d'air comprimé (2), qui présente un sécheur d'air (61) ;
- une soupape de purge d'air (240) qui est montée sur la conduite pneumatique principale (60) et se présente sous la forme d'une soupape pilote, comportant un raccord pilote (240.1),
- un compresseur (21) présentant au moins un étage de compresseur (21.1, 21.2),
- en plus de la conduite pneumatique principale (60), une soupape pilote (34) et un canal pneumatique pilote (32), qui relie pneumatiquement la soupape pilote (34) au raccord pilote (240.1) de la soupape de purge d'air (240),
**caractérisée en ce que**
- un système d'accumulateur pneumatique (300a, 300b, 300c, 300d) maintenant la pression est raccordé au raccord pilote (240.1), lequel système est conçu pour fournir une pression de commande pour le raccord pilote (240.1),
- indépendamment d'une pression dans la conduite pneumatique principale (60) au cours d'une purge d'air du système pneumatique (100a, 100b, 100c, 100d) et
- le système d'accumulateur pneumatique (300a, 300b, 300c, 300d) maintenant la pression présente au moins un accumulateur de pression pilote (320a, 320b, 320c, 320d) séparé, qui peut être relié pneumatiquement au raccord pilote (240.1) par le biais d'une conduite de commande (36).

2. Installation de production d'air comprimé (10a, 10b, 10c, 10d) selon la revendication 1, **caractérisée en ce que** l'accumulateur de pression pilote (320c) peut être relié pneumatiquement à la conduite pneumatique principale (60) par le biais d'une liaison d'accumulateur (324c).

3. Installation de production d'air comprimé (10a, 10b, 10c, 10d) selon la revendication 1, **caractérisée en ce que** l'accumulateur de pression pilote (320a, 320b) peut être relié pneumatiquement à un accumulateur de pression (120) par le biais d'une liaison d'accumulateur (324a, 324b).

4. Installation de production d'air comprimé (10a, 10b, 10c, 10d) selon la revendication 1, **caractérisée en ce que** l'accumulateur de pression pilote (320d) peut être relié pneumatiquement à une galerie (98) par le biais d'une liaison d'accumulateur (324d).

5. Installation de production d'air comprimé (10a, 10b, 10c, 10d) selon l'une quelconque des revendications 2 à 4, **caractérisée en ce que,** dans la liaison d'accumulateur (324a, 324b, 324c, 324d), une soupape d'accumulateur de pression (322) s'ouvrant en direction de l'accumulateur de pression pilote (320a, 320b, 320c, 320d) et se bloquant dans la direction opposée, en particulier une soupape antiretour d'accumulateur de pression (322a, 322b, 322c, 322d), est agencée.

6. Installation de production d'air comprimé (10a, 10b, 10c, 10d) selon l'une quelconque des revendications 1 à 4, **caractérisée en ce que** le système d'accumulateur pneumatique (300a, 300b, 300c, 300d) maintenant la pression est intégré totalement ou partiellement dans l'installation de production d'air comprimé (10a, 10b, 10c, 10d), en particulier forme une unité de construction avec celle-ci.

7. Installation de production d'air comprimé (10d) selon la revendication 5, **caractérisée en ce que** le système d'accumulateur pneumatique (300d) maintenant la pression est intégré totalement ou partiellement dans un bloc d'électrovanne (98).

8. Procédé pour faire fonctionner une installation de production d'air comprimé (10a, 10b, 10c, 10d) selon l'une quelconque des revendications 1 à 7, dans lequel l'installation de production d'air comprimé (10a, 10b, 10c, 10d) est utilisée pour faire fonctionner une installation pneumatique (90) dans un système pneumatique (100a, 100b, 100c, 100d) d'un véhicule (1000) et présente un système d'accumulateur pneumatique (300a, 300b, 300c, 300d) maintenant la pression comprenant au moins un accumulateur de pression pilote (320a, 320b, 320c, 320d) séparé, présentant les étapes :
- de compression d'air comprimé,
- d'alimentation du système pneumatique (100a, 100b, 100c, 100d), en particulier de l'installation pneumatique (90) et/ou d'un accumulateur de pression (120) et/ou d'une galerie (95), en air comprimé,
- de remplissage de l'accumulateur de pression pilote (320a, 320b, 320c, 320d),
- de mise en fonctionnement de l'installation pneumatique (90),
- de purge d'air du système pneumatique (100a, 100b, 100c, 100d) par le biais d'une soupape de purge d'air (240) conçue comme une soupape pilote, comprenant un raccord pilote (240.1),
dans lequel
- un système d'accumulateur pneumatique (300a, 300b, 300c, 300d) maintenant la pression raccordé au raccord pilote (240.1) maintient le raccord pilote (240.1) sous pression de commande,
- indépendamment d'une pression dans la conduite pneumatique principale (60) au cours d'une purge d'air du système pneumatique (100a, 100b, 100c, 100d),
- l'accumulateur de pression pilote (320a, 320b, 320c, 320d) est relié pneumatiquement au raccord pilote (240.1) par le biais de la conduite de commande (36) pour actionner la soupape de purge d'air (240).

9. Procédé selon la revendication 8, **caractérisé en ce que** l'accumulateur de pression pilote (320a, 320b, 320c, 320d) est rempli de manière autonome.

10. Procédé selon la revendication 8 ou 9, **caractérisé en ce que** le système d'accumulateur pneumatique (300, 300a, 300b, 300c, 300d) maintenant la pression est rempli par le biais de la conduite principale (60) et/ou de l'accumulateur de pression (120) et/ou de la galerie (95).

11. Véhicule (1000) comprenant un système pneumatique (100) et une installation de production d'air comprimé (10) selon l'une quelconque des revendications précédentes 1 à 7, en particulier pour la réalisation d'un procédé selon l'une quelconque des revendications 8 à 10.
